Europäisches Patentamt

European Patent Office

Office européen des brevets

(19)

(11) Publication number: **0 116 437**
**B1**

(12) **EUROPEAN PATENT SPECIFICATION**

(45) Date of publication of patent specification: **11.11.87**

(21) Application number: **84300623.0**

(22) Date of filing: **01.02.84**

(51) Int. Cl.⁴: **B 23 K 35/30, B 23 K 1/04,**
**B 23 K 9/00**

(54) Brazing alloy.

(30) Priority: **03.02.83 US 462781**

(43) Date of publication of application:
**22.08.84 Bulletin 84/34**

(45) Publication of the grant of the patent:
**11.11.87 Bulletin 87/46**

(84) Designated Contracting States:
**AT CH DE FR GB IT LI SE**

(56) References cited:
**AT-B- 372 030**

**Archiv für das Eisenhüttenwesen, Heft 7 (1937),
Seiten 297-306**

**Jänecke, KurzgefaBtes Handbuch aller
Legierungen (1949), Seiten 632-633**

**PATENT ABSTRACTS OF JAPAN, unexamined
applications, M filed, vol.5, no.206, December
26, 1981; THE PATENT OFFICE JAPANESE
GOVERNMENT, page 115M114**

(73) Proprietor: **Inco Alloys International, Inc.
Huntington West Virginia 25720 (US)**

(72) Inventor: **Kelly, Thomas Joseph
41 Maplewood Boulevard
Suffern NY 10901 (US)**

(74) Representative: **Greenstreet, Cyril Henry
Haseltine Lake & Co. Hazlitt House 28
Southampton Buildings Chancery Lane
London WC2A 1AT (GB)**

Courier Press, Leamington Spa, England.

**Description**

This invention relates to alloys for brazing iron-based alloys that are exposed in use to high temperatures.

Until recently alloys used for applications requiring high strength on prolonged exposure to temperatures above 871°C have been cobalt- or nickel-based. However an iron-based alloy, INCOLOY (trade mark) alloy MA 956, is now available that can be used up to 1204°C. This is an oxide-dispersion-strengthened, iron-chromium-aluminium alloy produced by mechanical alloying and having the nominal composition, in percent by weight (apart from impurities):

Fe 74, Cr 20, Al 4.5, Ti 0.5,
yttrium oxide ($Y_2O_3$) 0.5%.

The alloy is strengthened by a yttrium oxide dispersoid that remains stable at temperatures up to the high melting point of the material. The alloy combines strength at high temperatures with excellent resistance to oxidation, carburization, and hot corrosion. These attributes make it an especially suitable material for gas-turbine combustion chambers, components of advanced energy-conversion systems, and other applications involving rigorous service conditions.

The cobalt- and nickel-based high-temperature alloys previously used can be satisfactorily brazed by means of compatible cobalt- or nickel-based brazing alloys. However, problems have arisen in finding a suitable brazing alloy for use with alloy MA 956, particularly for service at or above 982°C. In particular, brazements made with commercially available cobalt- or nickel-based brazing alloys have been found to have inadequate stress-rupture life and to exhibit porosity, which appears to be due to the Kirkendall effect. Also, the boron that is used in most commercial brazing alloys as a primary melting point depressant is undesirable, as it diffuses into the MA 956 and forms brittle chromium boride phases.

The present invention overcomes these disadvantages by providing an iron-based brazing alloy for use in brazing iron-based high-temperature alloys in which the primary melting point depressant is manganese.

Phase diagrams of the iron-chromium-manganese alloy system are reproduced in the book "Kurzgefasstes Handbuch aller Legierungen" by E. Jänecke, 1949, pages 632—633.

According to the invention an alloy comprising, in percent by weight, from 19 to 30%, and preferably from 20 to 25% chromium, from 0 to 10% nickel, from 10 to 30% manganese, from 0 to 7% silicon, from 0 to 2% boron, from 0 to 0.3% carbon, and from 0 to 10% aluminium, the balance (apart from impurities) being iron, is used as a brazing alloy.

Chromium-manganese steels having compositions within this range are disclosed in a paper by·M. Schmidt and H. Legat in "Archiv für das Eisenhüttenwesen", Jan. 1937, pages 297—306.

In these alloys nickel imparts toughness and can maintain the austenitic nature of the alloy, silicon, manganese and carbon act as melting point depressants, and increased amounts of aluminium protect the alloys from carburization, nitridation and oxidation.

The presence of a substantial proportion of manganese in the alloys has a dual advantage. First, from 10 to 30% manganese in the iron-based system, in conjunction with silicon and carbon, is sufficient to depress the liquidus of the alloy below 1320°C. Secondly, most of the manganese vapourises during the brazing cycle. In fact, a microprobe analysis of a brazement of MA 956 revealed that, when brazing in a vacuum with a manganese containing alloy of the invention in thin layers (large surface area to volume ratio), the manganese had totally evaporated from the brazing alloy. This loss of manganese effectively increases the relative amounts of iron and chromium and any other non-volatile alloying elements used in the brazing alloy. Simultaneously, by altering the proportions of the remaining elements, it greatly increases the remelt temperature of the brazing alloy, without the undesirable tendency to form chromium borides (CrB) as second phases in the base metal that occurs when boron is used as the primary melting point depressant.

Other actual or potential disadvantages that are avoided by the avoidance of boron include the possibility of the available chromium content in solution in the iron being lowered by the formation of CrB to a level that would prevent passivation of the brazing alloy. This would be similar to sensitization of stainless steel by chromium carbide precipitation. Apart from the brittleness of the CrB phase, the boron therein appears to be easily replaced by nitrogen or oxygen at elevated temperatures so that this phase is preferentially attacked and corroded.

While it is an object of the invention to reduce the boron level in the brazement, or eliminate it altogether, a small quantity of boron may be present in the initial brazing alloy (i.e. before brazing) in order to reduce its melting point.

By way of example, seven heats Nos. 1—7 of alloys used according to the invention were prepared and converted to powder by atomisation, and the solidus and liquidus were determined by thermal analysis of samples of the atomised powder. The compositions and liquidus temperatures are set out in Table I.

**0 116 437**

TABLE I

| Heat No. | Fe | Cr | Ni | Mn | Si | B | C | Al | Liquidus temp. °C |
|---|---|---|---|---|---|---|---|---|---|
| 1 | Bal | 20 | 7.5 | 20 | 2.5 | 1.0 | .1 | — | 1271 |
| 2 | '' | 25 | 7.0 | 20 | 2.5 | 1.5 | .1 | .5 | 1258 |
| 3 | '' | 25 | — | 10 | 2.5 | 2.0 | .1 | 1.0 | 1290 |
| 4 | '' | 25 | — | 10 | 2.5 | 1.0 | .1 | — | 1302 |
| 5 | '' | 25 | — | 20 | 2.5 | 2.0 | — | 5.0 | 1310 |
| 6 | '' | 25 | 10 | 10 | 2.5 | 1.0 | .1 | 5.0 | 1302 |
| 7 | '' | 25 | — | 10 | 2.5 | 1.0 | .1 | 5.0 | 1315 |

The results of stress-rupture tests on "tuning fork" type brazements made by vacuum brazing pieces of alloy MA 956 at a vacuum of $10^{-6}$ Torr ($1.33 \times 10^{-4}$ Pa) with four of the alloys are set out in Table II. The stress was progressively increased during each test as indicated, and held at the highest stress until rupture occurred.

TABLE II

| Heat No. | Stress (MPa) | Time to rupture (h) | Temperature (°C) |
|---|---|---|---|
| 2 | 13.8/20.7/27.6/34.5 | 24/24/24/1000+ | 982 |
| 2 | 13.8/20.7/27.6 | 24/24/2.1 | 1092 |
| 7 | 13.8/20.7/27.6/34.5 | 24/24/24/581.9 | 982 |
| 4 | 13.8/20.7/27.6/34.5 | 23/24/24/39.6 | 1092 |

The failure of the test piece of Alloy No. 2 in the test at 1092°C was due not to overloading but to oxidation or nitridation.

The structure of Alloy No. 2 after remelting in a $10^{-6}$ Torr ($1.33 \times 10^{-4}$ Pa) vacuum to simulate a brazing cycle exhibited a 3-phase microstructure, the matrix being basically Fe-20Cr, while Alloy No. 5 had a two-phase microstructure with a matrix of essentially the same composition as Alloy MA 956. In both cases the second phase was chromium boride.

The invention includes the process of brazing iron-base high-temperature alloys with the brazing alloys of the compositions disclosed herein, and in particular vacuum brazing with these alloys.

**Claims**

1. The use of an alloy having the composition, in weight percent: from 19 to 30% chromium, from 0 to 10% nickel, from 10 to 30% manganese, from 0 to 7% silicon, from 0 to 2% boron, from 0 to 0.3% carbon, from 0 to 10% aluminium, balance (apart from impurities) iron, as a brazing material.

2. The use as a brazing material of an alloy as set forth in claim 1 in which the chromium content is from 20 to 25%.

3. The use as a brazing material of an alloy as set forth in claim 1 or claim 2 which is free from boron.

4. A process in which an iron-base high-temperature alloy is brazed with an alloy having the composition set forth in any of claims 1 to 3.

5. A process according to claim 4 in which the brazing is performed under vacuum.

**Patentansprüche**

1. Verwendung einer Legierung mit der Zusammensetzung in Gewichtsprozent: 19 bis 30% Chrom, 0 bis 10% Nickel, 10 bis 30% Mangan, 0 bis 7% Silizium, 0 bis 2% Bor, 0 bis 0,3% Kohlenstoff, 0 bis 10% Aluminium, der Rest (außer Verunreinigungen) Eisen als Hartlötmaterial.

2. Verwendung einer Legierung nach Anspruch 1 als Hartlötmaterial, in der der Chromgehalt 20 bis 25% beträgt.

3. Verwendung einer Legierung nach Anspruch 1 oder 2 als Hartlötmaterial, die kein Bor enthält.

3

**0 116 437**

4. Verfahren, bei dem eine Hochtemperatur-Legierung auf Eisenbasis mit einer Legierung mit der Zusammensetzung nach einem der Ansprüche 1 bis 3 hartgelötet wird.

5. Verfahren nach Anspruch 4, bei dem das Hartlöten unter Vakuum erfolgt.

**Revendications**

1. Utilisation à titre de matériau pour brasage fort, d'un alliage ayant la composition, en pour cent en poids: de 19 à 30% de chrome, de 0 à 10% de nickel, de 10 à 30% de manganèse, de 0 à 7% de silicium, de 0 à 2% de bore, de 0 à 0,3% de carbone, de 0 à 10% d'aluminium, le complément (à l'exclusion des impuretés) étant le fer.

2. Utilisation à titre de matériau pour brasage fort, d'un alliage selon la revendication 1, dans lequel la teneur en chrome va de 20 à 25%.

3. Utilisation à titre de matériau pour brasage fort, d'un alliage selon la revendication 1 ou 2, qui est exempt de bore.

4. Procédé dans lequel on brase un alliage à haute résistance à chaud, à base de fer, avec un alliage ayant la composition selon l'une quelconque des revendications 1 à 3.

5. Procédé selon la revendication 4, dans lequel on effectue le brasage sous vide.